# EUROPEAN PATENT SPECIFICATION

(11) **EP 0 478 392 B1**
(45) Date of publication and mention of the grant of the patent: **13.12.1995**
(21) Application number: 91308932.2
(22) Date of filing: 30.09.1991
(51) Int. Cl.: G01N 21/05, G01N 15/14

(54) **Particle analyzer and flow cell therefor**
Teilchenanalysator und Druchflusszelle dafür
Analyseur de particules et cellule d'écoulement correspondante

(30) Priority: 28.09.1990 JP 102710/90 U
(43) Date of publication of application: 01.04.1992
(73) Proprietor: TOA MEDICAL ELECTRONICS CO., LTD., Chuoku, Kobe (JP)
(72) Inventor: Fukuda, Masakazu, Kobe (JP); Nakamoto, Hiroyuki, Kobe (JP); Tohori, Hidemichi, Takasagoshi, Hyogoken (JP)
(74) Representative: Price, Paul Anthony King

(56) References cited:
- US-A- 4 515 274
- PATENT ABSTRACTS OF JAPAN vol. 14, no. 445 (P-1110)(4388) 25 September 1990 & JP-A-2 176 562
- PATENT ABSTRACTS OF JAPAN vol. 11, no. 340 (P-634)(2787) 7 November 1987 & JP-A-62 124 442

## Description

The present invention relates to a particle analyzer for optically detecting particles by entraining particles (such as cells, blood corpuscles or the like) in a sheath flow, and a flow cell used therefor.

As the apparatus for analyzing particles from a sample, such as cells and blood corpuscles, a so-called sheath flow system is widely known. In this system, by passing sheath liquid around the sample discharged from a sample nozzle, the sample liquid can be split up into particles in the flow cell. By optical measurement, the particles can be measured and analyzed. The "sheath flow" refers to a laminar flow of sheath liquid which surrounds the suspension of particles in order to cause the particles to pass in a line through the middle part of a small aperture.

Hitherto, in order to enhance the processing capacity of a flow cytometer, the apparatus disclosed in Japanese laid-open Patent Hei. 2-176562 is known.

Having plural inlets for feeding sample liquid, the sample liquid can be fed into the flow cell from different passages, thereby removing the need to clean the sample liquid when changing over.

However, this prior art arrangement suffers from the following problems.
(1) Sample measurement can be started only after both sample liquids are fed into their nozzle parts and prepared. This is because two nozzles are directed in the same direction. If, while measuring one sample liquid by passing it from one nozzle, it is attempted to introduce the other sample liquid into the other nozzle, this other sample liquid may leak out of the nozzle. If it leaks out of the nozzle, it may run into the detecting region and give rise to a measuring error. Thus, unless the preparation of both sample liquids is completed, measurement cannot be started, and therefore there is not much saving of time even though the prior art apparatus has the merit of simultaneous cleaning of both samples. In other words, a delay occurs if the two sample liquids are not prepared at the same time.
(2) It is difficult to manufacture double-structure nozzles.
(3) If merely two nozzles are provided, the flow paths of the two sample liquids are different. Special measures are required to provide sheath liquids, such as moving the nozzles or moving the optical system, as disclosed in the prior art publication. In fact, it is practically impossible to provide satisfactory sheath liquids for both samples.

According to a first aspect of the present invention, there is provided a flow cell for a particle analyzer, the flow cell comprising: a measurement zone; two liquid introduction zones each contiguous with a respective end of the measurement zone for introducing liquid into the measurement zone; two liquid specimen nozzles disposed in the liquid introduction zones at opposite ends of the measurement zone; two sheath liquid inlets each disposed in a respective one of the liquid introduction zones for entraining particles of liquid specimen emitted from the adjacent liquid specimen nozzle in a sheath liquid flow passing through the measurement zone; and two waste liquid outlets each disposed in a respective one of the liquid introduction zones for removing sheath liquid flow and entrained liquid specimen particles which have passed through the measurement zone.

Optionally, nozzle covers may be disposed around the liquid specimen nozzles, and the sheath liquid inlets may be disposed outside the nozzle covers while the waste liquid outlets are disposed inside the nozzle covers.

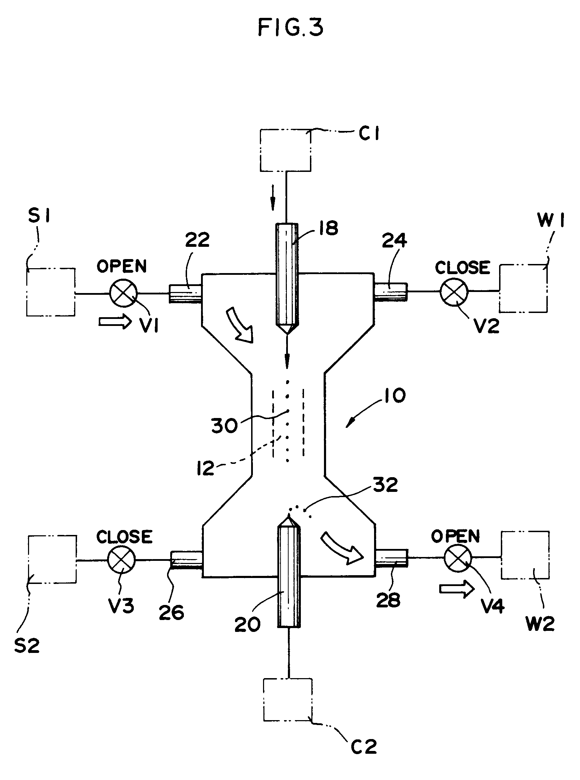

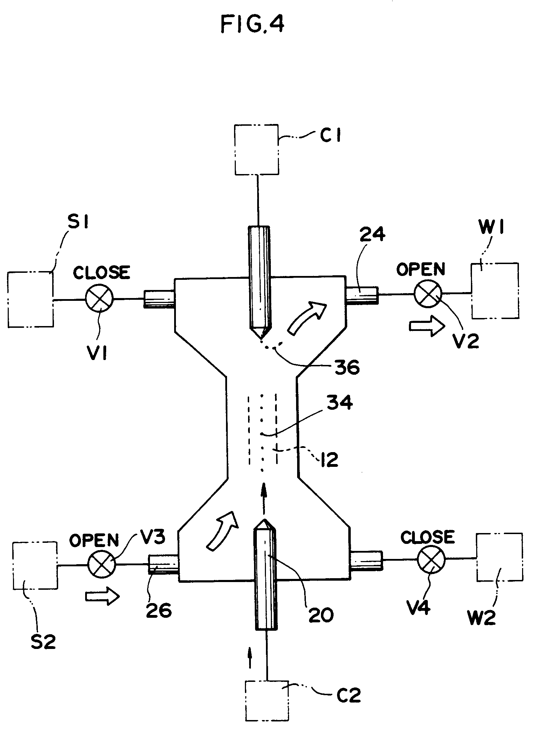

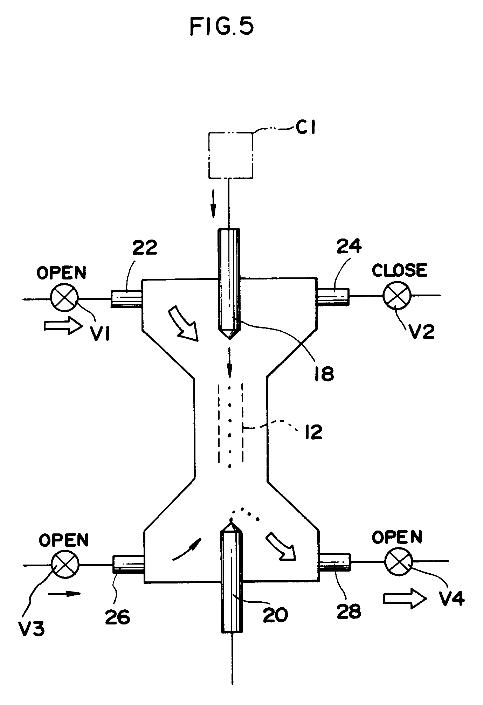

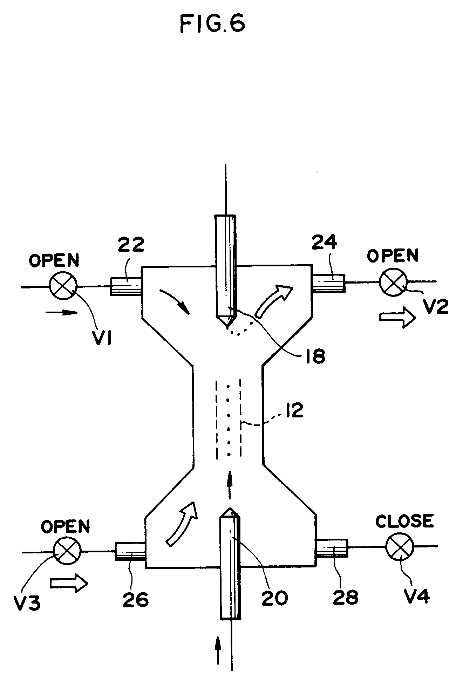

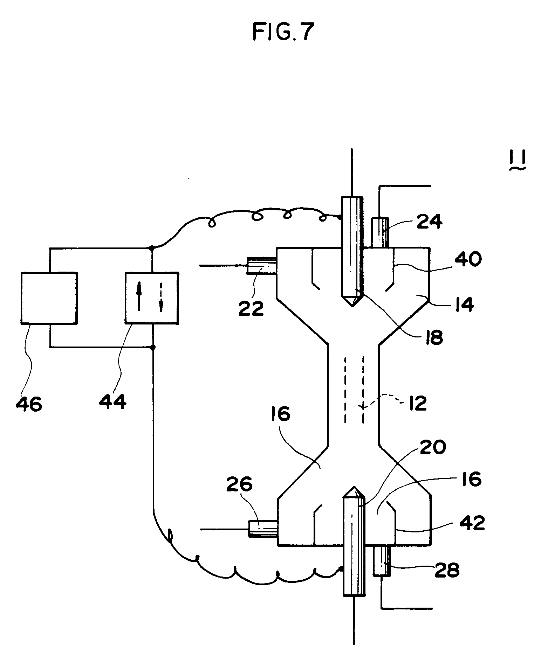

Also, electrodes may be provided. For example, the liquid specimen nozzles may be made of conductive material.
(1) As shown in Fig. 3, by passing a sheath liquid into a first sheath liquid inlet, while emitting a liquid specimen from a first liquid specimen nozzle and removing all of these liquids through a second waste liquid outlet, the first liquid specimen is entrained in the sheath liquid and passes through the measurement zone (this is hereinafter called the first state). By irradiating the entrained first liquid specimen with light, light signals from particles (such as scattered light and fluorescent light) are detected.
   As shown in Fig. 4, by passing a sheath liquid into a second sheath liquid inlet, while emitting a liquid specimen from a second liquid specimen nozzle and removing all of these liquids through a first waste liquid outlet, the second liquid specimen is entrained in the sheath liquid and passes through the measurement zone (hereinafter this state is called the second state).
   During measurement of the first liquid specimen, the second liquid specimen is prepared. If the second liquid specimen should leak out from the second liquid specimen nozzle, this liquid specimen flows into the second waste liquid outlet, but not into the measurement zone.
   During measurement of the first liquid specimen, if the first liquid specimen should leak out from the first liquid specimen nozzle, this liquid specimen will not flow into the measurement zone.
   In the first state, as shown in Fig. 5, a small flow of sheath liquid may be passed in from the second sheath liquid inlet. In the second state, as shown in Fig. 6, a small flow of sheath liquid may be passed in from the first sheath liquid inlet (so that an effect close to (2) below may be obtained).
(2) As shown in Fig. 7, in the first state, by further passing a slight amount of sheath liquid into the second sheath liquid inlet, the first liquid specimen flowing through the measurement zone is completely swept into the nozzle cover by the sheath liquid, and is discharged from the waste liquid outlet, and will not remain in the flow cell. Accordingly, in the second state, the sheath liquid is not contaminated by the preceding liquid specimen, and the same is true in the reverse case.
(3) By using conductive materials for the liquid specimen nozzles, an electric current can be passed between the liquid specimen nozzles from a constant-current source as shown in Fig. 7, and an impedance change occurring between the liquid specimen nozzles when particles pass through the measurement zone may be detected by detecting means. Thus, while passing the liquid specimen through the measurement zone, the particles may be detected optically and electrically at the same time. A similar effect may be obtained by passing an electric current by using a conductive material for the nozzle covers.

The invention will now be described by way of non-limiting embodiments with reference to the accompanying drawings, in which:-
Fig. 1 is a sectional view showing an embodiment of a flow cell in accordance with the invention;
Fig. 2 is a perspective view of a measurement zone of the flow cell of Fig. 1;
Fig. 3 and Fig. 4 illustrate the alternative flow regimes for the flow cell of Fig. 1;
Fig. 5 and Fig. 6 illustrate further flow regimes;
Fig. 7 illustrates another embodiment of a flow cell in accordance with the invention;
Fig. 8 is a liquid circuit diagram for a particle analyzer using the flow cell shown in Fig. 1 to Fig. 6; and
Fig. 9 is a liquid circuit diagram for a particle analyzer using the flow cell shown in Fig. 7.

### Embodiment 1

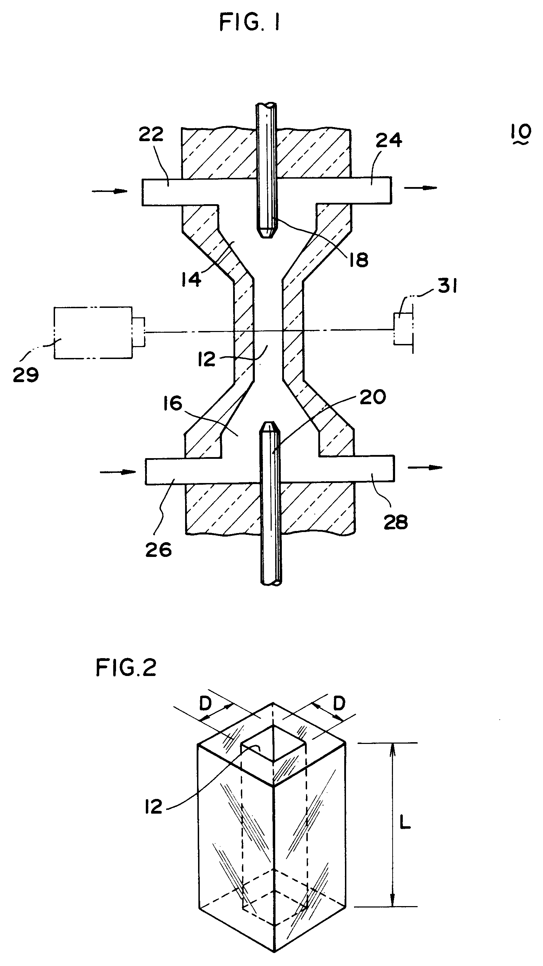

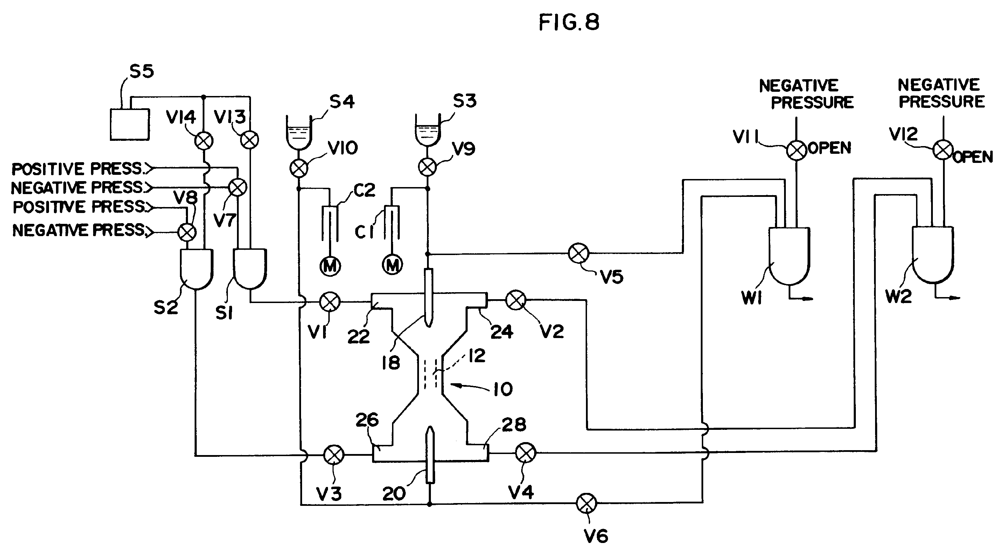

This embodiment relates to a flow cell 10 shown in Fig. 1 to Fig. 6, and a particle analyzer using this flow cell 10 and shown in Fig. 8.

Sheath liquid chambers S1, S2 receive and store sheath liquid within the apparatus from a sheath liquid tank S5 disposed outside the analyzer. Each sheath liquid chamber S1 or S2 is given either a positive pressure (a pressure higher than the atmospheric pressure) or a negative pressure (a pressure lower than the atmospheric pressure) through valves V7, V8, respectively, so as to draw in or force out the sheath liquid.

Specimen chambers S3, S4 temporarily pool the specimens to be analyzed after preparatory processing such as dilution and dyeing.

Syringes C1, C2 feed the liquid specimens into the flow cell 10 at a constant flow rate. By opening a valve V11 and valves V5, V9 for a specified time, negative pressure sucks the liquid specimen in the specimen chamber S3 into the vicinity of a liquid specimen nozzle 18. Then, by closing the valves V5, V9, as the syringe C1 expels the liquid, the liquid specimen is discharged from the liquid specimen nozzle 18.

By using the valve V7 to supply positive pressure and by opening valves V1, V4, the sheath liquid enters the flow cell 10 and the waste liquid is discharged.

During measurement of the first specimen, the second liquid specimen in the specimen chamber S4 is similarly fed to a liquid specimen nozzle 20, and a small quantity is expelled by the syringe C2 and discharged. Thus, the liquid specimen nozzle 20 is filled with the second specimen right up to its front end, ready for the next measurement. If the liquid specimen leaks out from the liquid specimen nozzle 20, it flows into a waste liquid outlet 28, and will not flow into a measurement zone 12. When the measurement of the first liquid specimen is over, the second liquid specimen is measured immediately. Any of the first liquid specimen remaining in the flow cell 10 is flushed away with a cleaning liquid. By discharging the cleaning liquid from the liquid specimen nozzle 18, the inner surface of the liquid specimen nozzle 18 is cleaned. At this time, too, the liquid from the liquid specimen nozzle 18 will not flow into the measurement zone 12. W1, W2 are waste liquid chambers, 29 is a light emitting element such as a laser source and 31 is a light receiving element.

The width D of the measurement zone 12 (see Fig. 2) is generally 200 to 400 »m when using optical measurement alone, or 50 to 150 »m when using resistance and optical measurement. The length L of the measurement zone 12 (see Fig. 2) is generally 2 to 20 »m when using optical measurement alone, and 50 to 150 »m when using electric resistance and optical measurement.

### Embodiment 2

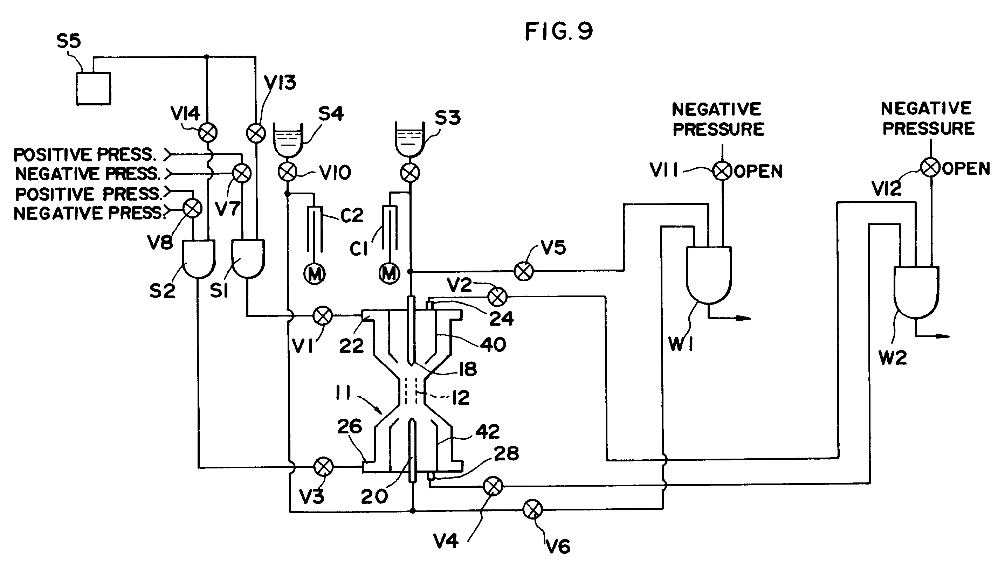

This embodiment relates to a flow cell 11 shown in Fig. 7 and a particle analyzer using the flow cell 11 and shown in Fig. 9.

As shown in Fig. 7, liquid specimen nozzles 18, 20 are made of corrosion-resistant conductive material, and are connected to a constant-current source 44 by wires. In the first state (the state of discharging liquid specimen from the liquid specimen nozzle 18), a constant current is passed so that the liquid specimen nozzle 18 is positive and the liquid specimen nozzle 20 is negative. The arrangement is such that air bubbles generated at the negative electrode by electrolysis do not flow into the measurement zone 12.

In the second state, a constant current is passed so that the liquid specimen nozzle 18 is negative and the liquid specimen nozzle 20 is positive. Thus, by alternating the direction of the current in synchronism with the flow of the liquid, generation of air bubbles and electrode corrosion is suppressed. Detecting means 46 changes over the signal polarity so as to detect the signal for only one electrode, for example, the negative electrode.

Instead of using the liquid specimen nozzles as the electrodes, electrodes may be separately installed in the liquid introduction zones 14, 16. For example, nozzle covers 40, 42 may be used as the electrodes.

In Fig. 9, the measuring method is the same as for Embodiment 1. In Embodiment 1, however, if a contaminated portion of the preceding specimen is left over in the flow cell, or the specimen leaks out into the cell from the front ends of the liquid specimen nozzles 18, 20, the cell is contaminated. Also, when measuring the specimen by using resistance measurement by applying positive and negative voltages to the liquid specimen nozzles 18, 20, particles may reverse direction because of spreading out after neutralization, and this may adversely affect the counting.

In Embodiment 2, such effects are avoided by covering the liquid specimen nozzles 18, 20 with nozzle covers 40, 42.

While measuring by passing a specimen from the liquid specimen nozzle 18 towards the liquid specimen nozzle 20, a weak sheath pressure is applied from the sheath liquid inlet 26 around the outside of the nozzle cover 42 of the liquid specimen nozzle 20, and the waste liquid is removed through the waste liquid outlet 28 on the inside of the nozzle cover 42. This is called the back sheath system.

When passing a liquid specimen from the liquid specimen nozzle 20 towards the liquid specimen nozzle 18, the specimen is measured. At this time, a clean sheath liquid is always flowing, while a back sheath liquid is flowing through the zone where the specimen spreads out after being neutralized. Thus, the specimen particles do not reverse direction, but flow into the nozzle cover 40.

The above described embodiments of the invention offer the following benefits.
(1) Two liquid specimen nozzles face each other and, while measuring by discharging a liquid specimen from one liquid specimen nozzle, another liquid specimen may be prepared in the other liquid specimen nozzle, so that the overall analysis time is shortened.
(2) When nozzle covers are used, the liquid specimen is completely discharged out of the flow cell and none remains inside. Thus, the flow cell is not contaminated if used for a long time.
(3) When liquid specimen nozzles are used as electrodes, optical detection and electrical detection may be used simultaneously, and analysis of higher precision is achieved.

Having described preferred embodiments of the invention with reference to the accompanying drawings, it is to be understood that the invention is not limited to those precise embodiments, and that various changes and modifications may be effected therein by one skilled in the art.

## Claims

1. A flow cell (10) for a particle analyzer, the flow cell (10) comprising:
a measurement zone (12);
two liquid introduction zones (14, 16) each contiguous with a respective end of the measurement zone (12) for introducing liquid into the measurement zone (12);
two liquid specimen nozzles (18, 20) disposed in the liquid introduction zones (14, 16) at opposite ends of the measurement zone (12);
two sheath liquid inlets (22, 26) each disposed in a respective one of the liquid introduction zones (14, 16) for entraining particles of liquid specimen emitted from the adjacent liquid specimen nozzle (18, 20) in a sheath liquid flow passing through the measurement zone (12); and
two waste liquid outlets (24, 28) each disposed in a respective one of the liquid introduction zones (14, 16) for removing sheath liquid flow and entrained liquid specimen particles which have passed through the measurement zone (12).

2. A flow cell (10) according to claim 1, wherein nozzle covers (40, 42) are disposed around the liquid specimen nozzles (18, 20), and the sheath liquid inlets (22, 26) are disposed outside the nozzle covers (40, 42), and the waste liquid outlets (24, 28) are disposed inside the nozzle covers (40, 42).

3. A flow cell (10) according to claim 2, wherein the liquid specimen nozzles (18, 20) are made of conductive material.

4. A flow cell (10) according to claim 2 or 3, wherein the nozzle covers (40, 42) are made of conductive material.

5. A flow cell (10) according to any one of claims 1 to 4, wherein each liquid specimen nozzle (18, 20) has a nozzle outlet which faces the nozzle outlet of the other liquid specimen nozzle.

6. A flow cell (10) according to claim 5, wherein the measurement zone (12) is elongate longitudinally and the nozzle outlets lie on a notional line passing along the length of the measurement zone (12).

7. A particle analyzer comprising a flow cell (10) according to any one of the preceding claims.

8. A particle analyzer according to claim 7, further comprising light emitting and detecting means (29, 31) for passing a light beam through the measurement zone (12) to count entrained particles.

## Patentansprüche

1. Durchflußzelle (10) für einen Teilchenanalysator, wobei die Durchflußzelle (10)
eine Meßzone (12),
zwei Flüssigkeitseinführungszonen (14,16), von denen jede mit einem jeweiligen Ende der Meßzone (12) zur Einführung von Flüssigkeit in die Meßzone (12) in Verbindung steht,
zwei Flüssigkeitsprobendüsen (18, 20), die in den Flüssigkeitseinführungszonen (14, 16) an entgegengesetzten Enden der Meßzone (12) angeordnet sind,
zwei Hüllenflüssigkeitseinlässe (22, 26), von denen jeder in einer jeweiligen der Flüssigkeitseinführungszonen (14, 16) angeordnet ist, um Teilchen von flüssiger Probe, die von der benachbarten Flüssigkeitsprobendüse (18, 20) abgegeben wird, in einem Umhüllungsflüssigkeitsfluß mitzureißen, der durch die Meßzone (12) geht, und
zwei Abfallflüssigkeitsauslässe (24, 28), von denen jeder in einer jeweiligen der Flüssigkeitseinführungszonen (14, 16) angeordnet ist, um Umhüllungsflüssigkeitsfluß und mitgerissene Flüssigkeitsprobenteilchen, die durch die Meßzone (12) gingen, zu entfernen, umfaßt.

2. Durchflußzelle (10) nach Anspruch 1, bei der Düsenabdeckungen (40, 42) um die Flüssigkeitsprobendüsen (18, 20) angeordnet sind und die Umhüllungsflüssigkeitseinlässe (22, 26) außerhalb der Düsenabdeckungen (40, 42) angeordnet sind und die Abfallflüssigkeitsauslässe (24, 28) im Inneren der Düsenabdeckungen (40, 42) angeordnet sind.

3. Durchflußzelle (10) nach Anspruch 2, bei der die Flüssigkeitsprobendüsen (18, 20) aus einem leitfähigen Material bestehen.

4. Durchflußzelle (10) nach Anspruch 2 oder 3, bei der die Düsenabdeckungen (40, 42) aus leitfähigem Material bestehen.

5. Durchflußzelle (10) nach einem der Ansprüche 1 bis 4, bei der jede Flüssigkeitsprobendüse (18, 20) einen Düsenauslaß hat, welcher zu dem Düsenauslaß der anderen Flüssigkeitsprobendüse hinblickt.

6. Durchflußzelle (10) nach Anspruch 5, bei der die Meßzone (12) in Längsrichtung länglich ausgebildet ist und die Düsenauslässe auf einer fiktiven Linie liegen, die entlang der Länge der Meßzone (12) geht.

7. Teilchenanalysator mit einer Durchflußzelle (10) nach einem der vorausgehenden Ansprüche.

8. Teilchanalysator nach Anspruch 7, weiterhin mit lichtemittierenden und feststellenden Einrichtungen (29, 31) für den Durchgang eines Lichtstrahles durch die Meßzone (12), um mitgerissene Teilchen auszuzählen.

## Revendications

1. Cellule d'écoulement (10) pour analyseur de particules, la cellule d'écoulement (10) comprenant:
une zone de mesure (12);
deux zones d'introduction de liquide (14, 16) chacune étant contiguë à une extrémité correspondante de la zone de mesure (12) destinées à introduire le liquide dans la zone de mesure (12);
deux buses d'échantillon de liquide (18, 20) placées dans les zones d'introduction de liquide (14, 16) aux extrémités opposées de la zone de mesure (12);
deux entrées de liquide d'enveloppe (22, 26) chacune étant placée dans une des zones d'introduction de liquide (14, 16) correspondante pour entraîner les particules de l'échantillon de liquide délivrées par la buse d'échantillon de liquide adjacente (18, 20) dans un écoulement de liquide d'enveloppe traversant la zone de mesure (12); et
deux sorties de liquide usé (24, 28) chacune étant placée dans une des zones d'introduction de liquide correspondante (14, 16) afin d'évacuer l'écoulement de liquide d'enveloppe et les particules de l'échantillon de liquide entraînées qui ont traversé la zone de mesure (12).

2. Cellule d'écoulement (10) selon la revendication 1, où les capots de buse (40, 42) sont placés autour des buses d'échantillon de liquide (18, 20), et les entrées de liquide d'enveloppe (22, 26) sont placées à l'extérieur des capots de buse (40, 42), et les sorties de liquide usé (24, 28) sont placées à l'intérieur des capots de buse (40, 42).

3. Cellule d'écoulement (10) selon la revendication 2, où les buses d'échantillon de liquide (18, 20) sont faites de matière conductrice.

4. Cellule d'écoulement (10) selon la revendication 2 ou 3, où les capots de buse (40, 42) sont faits de matière conductrice.

5. Cellule d'écoulement (10) selon l'une quelconque des revendications 1 à 4, où chaque buse d'échantillon de liquide (18, 20) comporte une sortie de buse qui est opposée à la sortie de buse de l'autre buse d'échantillon de liquide.

6. Cellule d'écoulement (10) selon la revendication 5, où la zone de mesure (12) est allongée longitudinalement et les sorties de buse sont situées sur une ligne imaginaire le long de l'axe longitudinal de la zone de mesure (12).

7. Analyseur de particules comprenant une cellule d'écoulement (10) selon l'une quelconque des revendications précédentes.

8. Analyseur de particules selon la revendication 7, comprenant en outre un moyen d'émission et de réception de lumière (29, 31) destiné à faire passer un faisceau lumineux par la zone de mesure (12) afin de compter les particules entraînées.
